# EUROPEAN PATENT APPLICATION

(11) **EP 4 613 997 A1**
(43) Date of publication of application: **10.09.2025**
(21) Application number: 25160167.0
(22) Date of filing: 26.02.2025
(51) Int. Cl.: F02D 19/06, F02D 41/00, F02M 21/02, F02D 19/02, F02D 29/06

(54) **FUEL SUPPLY DEVICE AND ENGINE SYSTEM**

(30) Priority: 08.03.2024 JP 2024035780
(71) Applicant: Yanmar Holdings Co., Ltd., Osaka-shi, Osaka (JP)
(72) Inventor: IWAKURA, Masanao, Osaka-shi (JP); FUKUI, Yoshinori, Osaka-shi (JP); KUBO, Takahiro, Osaka-shi (JP)
(74) Representative: Sekiguchi, Kazuya

(57) **Abstract**

[Problem] Provided are a fuel supply device and an engine system that can suppress diffusion of a gas fuel leaking from each component when the fuel is supplied to an engine.

[Solution] A fuel supply device 3 that supplies at least a gas fuel to a predetermined supply target such as an engine 2 includes: a gas fuel supply unit 16 as a gas fuel adjustment unit that adjusts a supply volume of the gas fuel and supplies the gas fuel to the supply target; a pressure adjustment device 13 that adjusts supply pressure of the gas fuel; and a temperature adjustment unit 14 that is disposed between the pressure adjustment device 13 and the gas fuel supply unit 16 in a supply direction of the gas fuel and adjusts, in accordance with an operation state and/or an operation environment of the supply target, a temperature of the gas fuel supplied to the gas fuel supply unit 16. The pressure adjustment device 13 and the temperature adjustment unit 14 are accommodated in a common housing 18.

## Description

### TECHNICAL FIELD

The present invention relates to a fuel supply device that supplies at least a gas fuel to a supply target such as an engine, and an engine system including the fuel supply device.

### BACKGROUND ART

Conventionally, an engine system including a gas engine or a dual-fuel engine includes a gas fuel supply valve such as a gas admission valve (GAV) in order to inject a gas fuel such as hydrogen into a combustion chamber in a cylinder.

In addition, an engine system disclosed in Patent Document 1 includes at least an engine that generates power by burning a gas fuel, a gas fuel supply pipe through which the gas fuel is supplied to the engine, and a fuel flow rate adjustment unit that adjusts a flow rate of the gas fuel to the gas fuel supply pipe.

### PRIOR ART DOCUMENT

### PATENT DOCUMENT

Patent Document 1: JP 2022-149336 A

### SUMMARY OF INVENTION

### TECHNICAL PROBLEM

Incidentally, in the engine system, in order to finely perform output control of the engine, it is necessary to adjust the valve opening period of the gas fuel supply valve and the gas fuel injection amount by the fuel flow rate adjustment unit. However, in the engine system, the minimum injection period is restricted by the gas fuel supply valve. Therefore, it is difficult to accurately control the gas fuel injection amount in a low load region, and it is difficult to appropriately control a minute engine output that is lower than the engine output in the minimum injection period. Also, in the engine system, a fuel supply device that supplies fuel to the engine is required to suppress diffusion of the gas fuel leaking from each component.

An object of the present invention is to provide a fuel supply device and an engine system capable of finely performing output control of an engine by more finely controlling the supply volume of a gas fuel. Another object of the present invention is to provide the fuel supply device and the engine system capable of suppressing diffusion of the gas fuel leaking from each component when the fuel is supplied to the engine.

### SOLUTION TO PROBLEM

In order to solve the above problems, a fuel supply device of the present invention is a fuel supply device that supplies at least a gas fuel to a predetermined supply target, the fuel supply device including: a gas fuel adjustment unit that adjusts a supply volume of the gas fuel and supplies the gas fuel to the supply target; and a temperature adjustment unit that adjusts a temperature of the gas fuel supplied to the gas fuel adjustment unit in accordance with an operation state and/or an operation environment of the supply target.

Alternatively, the fuel supply device of the present invention is a fuel supply device that supplies at least a gas fuel to a predetermined supply target, the fuel supply device including: a gas fuel adjustment unit that adjusts a supply volume of the gas fuel and supplies the gas fuel to the supply target; a pressure adjustment device that adjusts supply pressure of the gas fuel; and a supply pressure adjustment unit that is disposed between the pressure adjustment device and the gas fuel adjustment unit in a supply direction of the gas fuel and adjusts supply pressure of the gas fuel supplied to the gas fuel adjustment unit, in accordance with an operation state and/or an operation environment of the supply target. The pressure adjustment device and the temperature adjustment unit are accommodated in a common housing.

Further, an engine system of the present invention is an engine system including the fuel supply device described above and the engine. The temperature adjustment unit includes a heat exchange unit that allows a heat exchange medium to flow therethrough and act on the gas fuel, and a flow rate adjustment unit that adjusts a flow rate of the heat exchange medium. The engine system further includes a control device that controls the gas fuel adjustment unit and the flow rate adjustment unit. The control device calculates a target temperature of the gas fuel based on a target output of the engine, and when a detected temperature of the gas fuel is below the target temperature, the control device controls the flow rate adjustment unit to increase the temperature of the gas fuel to cause the detected temperature to reach the target temperature.

Furthermore, the engine system of the present invention is an engine system including the fuel supply device described above and the engine. The temperature adjustment unit includes a heat exchange unit that allows a heat exchange medium to flow therethrough and act on the gas fuel, and a flow rate adjustment unit that adjusts a flow rate of the heat exchange medium. The engine system further includes a control device that controls the gas fuel adjustment unit and the flow rate adjustment unit. When a target output of the engine is a predetermined output threshold or more, the control device controls the flow rate adjustment unit to stop a flow of the heat exchange medium.

Alternatively, the engine system of the present invention is an engine system including the fuel supply device described above and the engine. The temperature adjustment unit includes a heat exchange unit that allows a heat exchange medium to flow therethrough and act on the gas fuel, and a cooling device that cools the heat exchange medium. The engine system further includes a control device that controls the gas fuel adjustment unit and the cooling device. When a target output of the engine is a predetermined output threshold or more, the control device controls the cooling device to operate.

### ADVANTAGEOUS EFFECTS OF INVENTION

According to the present invention, the fuel supply device and the engine system capable of finely performing output control of the engine by more finely controlling the supply volume of a gas fuel is provided. According to the present invention, the fuel supply device and the engine system capable of suppressing diffusion of the gas fuel leaking from each component when the fuel is supplied to the engine.

### BRIEF DESCRIPTION OF DRAWINGS

FIG. 1 is a schematic diagram illustrating an example of an engine system including a fuel supply device according to an embodiment of the present invention.
FIG. 2 is a schematic view illustrating an example of an engine in the engine system including the fuel supply device according to the embodiment of the present invention.
FIG. 3 is a perspective view illustrating an example of a pressure adjustment device in the fuel supply device according to the embodiment of the present invention.
FIG. 4 is a perspective view illustrating an example of the pressure adjustment device in the fuel supply device according to the embodiment of the present invention.
FIG. 5 is a perspective view illustrating an example of a temperature adjustment unit and a chamber in the fuel supply device according to the embodiment of the present invention.
FIG. 6 is a perspective view illustrating an example of the temperature adjustment unit and the chamber in the fuel supply device according to the embodiment of the present invention.
FIG. 7 is a schematic diagram illustrating an example of the temperature adjustment unit in the fuel supply device according to the embodiment of the present invention.
FIG. 8 is a schematic diagram illustrating another example of the temperature adjustment unit in the fuel supply device according to the embodiment of the present invention.
FIG. 9 is a flowchart illustrating an operation example of the fuel supply device according to the embodiment of the present invention.
FIG. 10 is a time chart illustrating an operation example of the fuel supply device according to the embodiment of the present invention when a diesel mode is changed to a gas mode.
FIG. 11 is a schematic diagram illustrating an arrangement pattern of the pressure adjustment device and the temperature adjustment unit of the fuel supply device according to the embodiment of the present invention.
FIG. 12 is a graph illustrating an example of a map indicating the relationship between a load of the engine and target supply pressure of a gas fuel in the fuel supply device according to a modified example of the present invention.
FIG. 13 is a graph illustrating an example of a map indicating the relationship between a load of the engine and target supply pressure of the gas fuel in the fuel supply device according to a modified example of the present invention.

### DESCRIPTION OF EMBODIMENTS

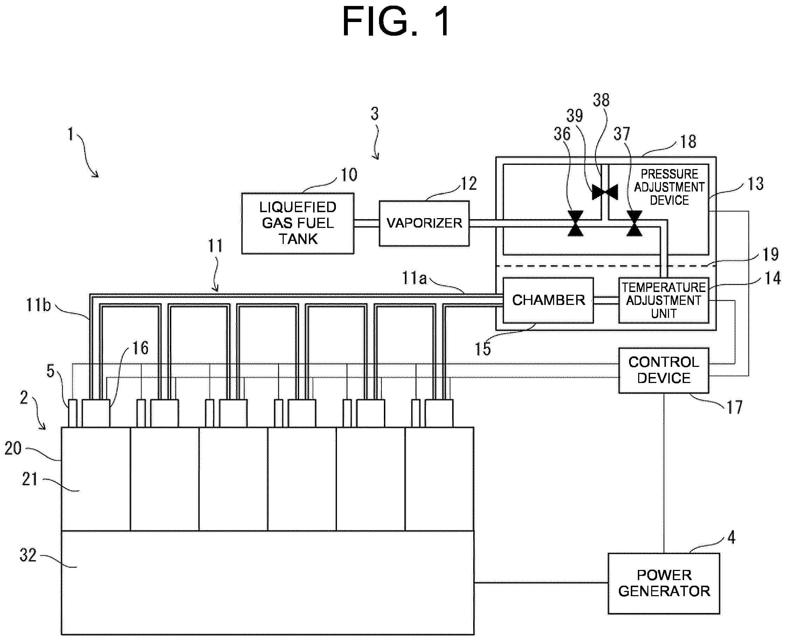

An engine system 1 according to an embodiment of the present invention will be described with reference to the drawings. As illustrated in FIG. 1, the engine system 1 includes at least an engine 2 that is operated by a gas fuel, and a fuel supply device 3 that supplies the gas fuel to the engine 2 as a supply target to which the fuel is supplied. The engine 2 includes a propulsion engine (main engine) and a power generation engine (an auxiliary engine) of a ship or the like. In the present embodiment, an example will be described in which the engine system 1 includes the engine 2 as a power generation engine (an auxiliary engine), the engine 2 and a power generator 4 are connected to each other, and the power generator 4 is driven by the output of the engine 2.

In the present embodiment, in particular, an example will be described in which the engine 2 is formed of a dual-fuel engine that is driven when at least one of a gas fuel such as hydrogen and a liquid fuel such as light oil or heavy oil is supplied to a combustion chamber 25 of the engine 2 will be described. Any one of combustion modes of a gas mode in which only the gas fuel is used as the fuel of the engine 2, a diesel mode in which only the liquid fuel is used, and a mixed combustion mode in which both the gas fuel and the liquid fuel are used is set, thereby operating the engine system 1.

The engine system 1 includes a liquid fuel supply unit 5 that supplies the liquid fuel to the engine 2. The liquid fuel supply unit 5 is connected to a liquid fuel tank (not illustrated) through a liquid fuel supply path (not illustrated) and is configured to introduce (inject) the liquid fuel supplied through the liquid fuel supply path into the combustion chamber 25 of the engine 2.

The fuel supply device 3 includes a liquefied gas fuel tank 10 (gas fuel reservoir), a gas fuel supply path 11, a vaporizer 12, a pressure adjustment device 13, a temperature adjustment unit 14, a chamber 15, a gas fuel supply unit 16 (gas fuel adjustment unit), and a control device 17. Details of each part of the fuel supply device 3 will be described below.

First, the engine 2 will be described.

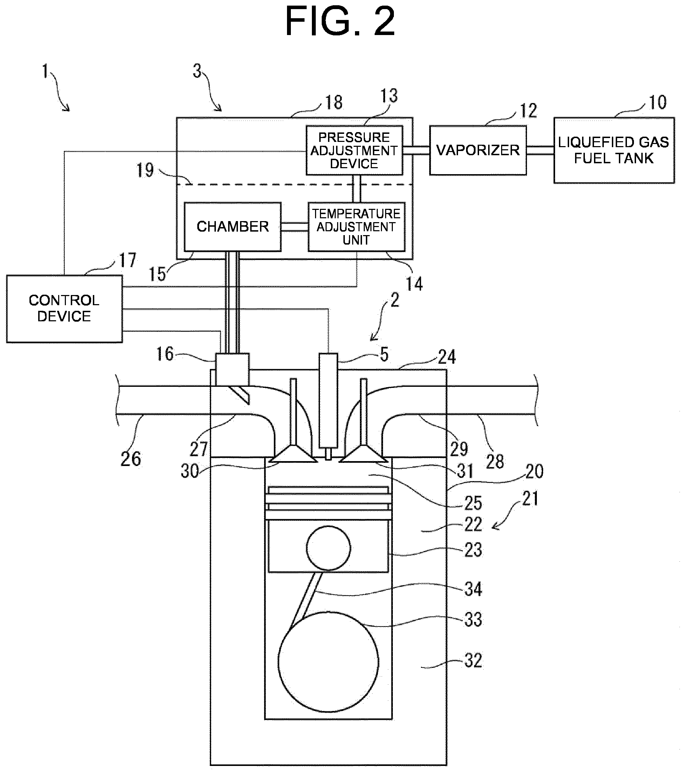

The engine 2 includes a plurality of cylinders 21 in a cylinder block 20. As illustrated in FIG. 2, each of the cylinders 21 includes, for example, a cylinder 22, a piston 23, and a cylinder head 24 and forms the combustion chamber 25 therein. Each cylinder 21 is provided with the gas fuel supply unit 16 and the liquid fuel supply unit 5.

The cylinder 22 is formed in, for example, a tubular shape in the cylinder block 20, and the piston 23 is slidably accommodated in the cylinder 22. The cylinder head 24 is attached to the upper side of the cylinder 22, and the combustion chamber 25 is formed on the inner side of the cylinder 22 and the cylinder head 24.

The cylinder head 24 includes an intake port 27 connected to an intake path 26 from which air is introduced and an exhaust port 29 connected to an exhaust path 28 from which exhaust gas is discharged. The intake port 27 and the exhaust port 29 are in communication with the combustion chamber 25, and the cylinder head 24 includes an intake valve 30 and an exhaust valve 31 that opens and closes the intake port 27 and the exhaust port 29, respectively, with respect to the combustion chamber 25.

An example in which the intake path 26 and the intake port 27 are directly connected is illustrated in FIG. 2; however, alternatively, in another example, the intake path 26 and the intake port 27 may be connected via an intake manifold disposed between the intake path 26 and the engine 2. An example in which the exhaust path 28 and the exhaust port 29 are directly connected is illustrated in FIG. 2; however, alternatively, in another example, the exhaust path 28 and the exhaust port 29 may be connected via an exhaust manifold disposed between the exhaust path 28 and the engine 2.

The cylinder head 24 is provided with the gas fuel supply unit 16 so as to supply the gas fuel into the intake port 27 and is provided with the liquid fuel supply unit 5 so as to supply the liquid fuel into the combustion chamber 25. The intake port 27 introduces a mixture gas of the gas fuel supplied from the gas fuel supply unit 16 and the air supplied from the intake path 26 into the combustion chamber 25. The exhaust port 29 discharges the exhaust gas generated in the combustion chamber 25 to the exhaust path 28.

In each cylinder 21, a small amount of pilot fuel (liquid fuel) is injected into the combustion chamber 25 by the liquid fuel supply unit 5 at an appropriate timing when the mixture gas introduced from the intake port 27 is compressed by sliding of the piston 23, and thus the gas fuel in the mixture gas is ignited. The piston 23 reciprocates in the cylinder 21 by propulsive force obtained from an explosion generated in the combustion chamber 25.

Each cylinder 22 of the plurality of cylinders 21 is in communication with a crank case 32, and a crankshaft 33 is rotatably supported by the crank case 32. The piston 23 of each cylinder 21 is connected via a connecting rod 34 to the crankshaft 33, and the reciprocating motion of the piston 23 is converted via the connecting rod 34 into a rotational motion of the crankshaft 33.

Next, each part of the fuel supply device 3 will be described.

The liquefied gas fuel tank 10 stores liquefied gas fuel, and stores, for example, liquefied gas fuel that is hydrogen fuel in a liquid state.

The gas fuel supply path 11 connects the liquefied gas fuel tank 10 to the gas fuel supply unit 16 and allows the gas fuel to flow from the liquefied gas fuel tank 10 to the gas fuel supply unit 16. The vaporizer 12, the pressure adjustment device 13 (a supply pressure adjustment unit), the temperature adjustment unit 14, and the chamber 15 are disposed in this order between the liquefied gas fuel tank 10 and the gas fuel supply unit 16 in the gas fuel supply path 11.

The gas fuel supply path 11 is formed of a multilayer pipe (for example, a double pipe) between the chamber 15 and the gas fuel supply unit 16, and is configured to maintain pressure (supply pressure) of the gas fuel adjusted by the pressure adjustment device 13 and temperature of the gas fuel adjusted by the temperature adjustment unit 14. The gas fuel supply path 11 of a multilayer pipe allows the gas fuel to flow through the inner most pipe and allows air to flow between the outer pipe covering the inner most pipe and the inner most pipe.

In addition, the gas fuel supply path 11 includes a common path 11a allowing the gas fuel to flow through a plurality of gas fuel supply units 16 of the plurality of cylinders 21 in common, and a plurality of branch paths 11b branched from the common path 11a and allowing the gas fuel to flow through each of the plurality of gas fuel supply units 16. The vaporizer 12, the pressure adjustment device 13, the temperature adjustment unit 14, and the chamber 15 are disposed in this order in the common path 11a.

The vaporizer 12 vaporizes the liquid gas fuel supplied from the liquefied gas fuel tank 10, and supplies the vaporized gas fuel through the gas fuel supply path 11 to the pressure adjustment device 13.

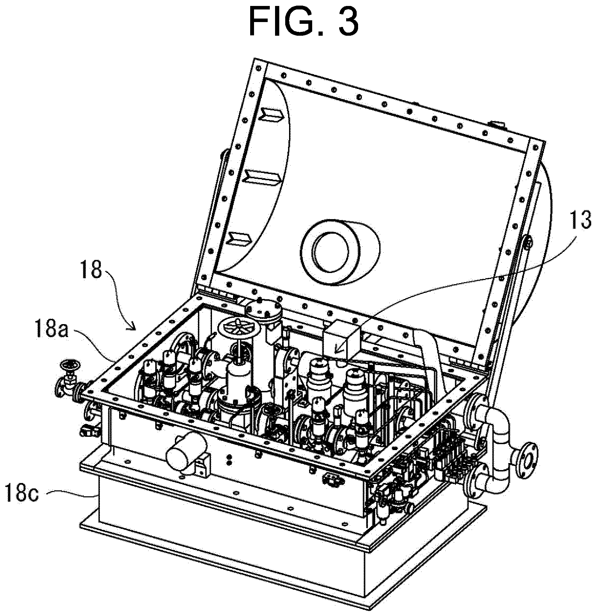

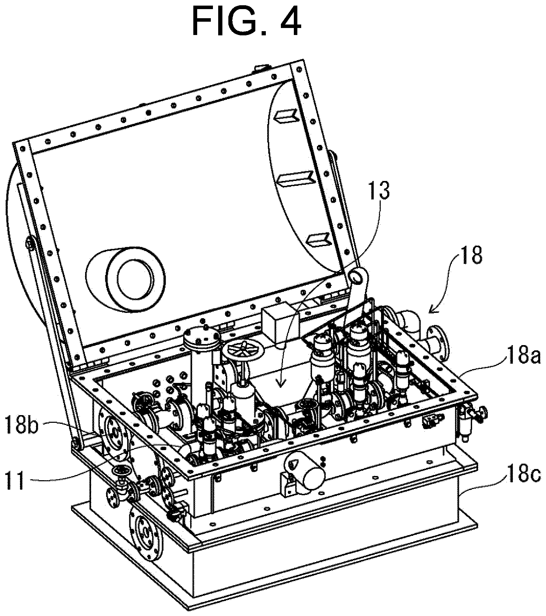

The pressure adjustment device 13 adjusts the supply pressure of the gas fuel supplied via the gas fuel supply unit 16, and supplies the gas fuel, the supply pressure of which is regulated, through the gas fuel supply path 11 to the temperature adjustment unit 14. For example, as illustrated in FIG. 3 and FIG. 4, the pressure adjustment device 13 is formed of a gas valve unit (GVU) including a plurality of valves.

For example, as illustrated in FIG. 1, the pressure adjustment device 13 includes a first shut-off valve 36 on the upstream side in the supply direction of the gas fuel in the gas fuel supply path 11, a second shut-off valve 37 on the downstream side, and an open valve 39 in an open path 38 branched from the gas fuel supply path 11 between the first shut-off valve 36 and the second shut-off valve 37. The pressure adjustment device 13 controls the opening of the first shut-off valve 36 and the second shut-off valve 37 in response to a control signal from the control device 17, thereby adjusting the supply pressure (flow rate per unit time) of the gas fuel flowing on the downstream side of the pressure adjustment device 13. In addition, the pressure adjustment device 13 normally closes the open valve 39, and in the meantime, can also control purge function of the gas fuel in the gas fuel supply path 11 by closing the first shut-off valve 36 and opening the open valve 39 in response to a control signal from the control device 17.

The pressure adjustment device 13 is disposed inside a predetermined housing 18; in the meantime, an example in which the pressure adjustment device 13 is disposed on a second floor portion 18a of the housing 18 having a hierarchical structure is illustrated in FIG. 3 and FIG. 4. In FIG. 4, an example will be described in which the gas fuel supply path 11 in the pressure adjustment device 13 is disposed so as to enter from an inlet 18b on the side surface of the second floor portion 18a of the housing 18 having a hierarchical structure, extend across the inside of the second floor portion 18a, and further exit from the bottom surface of the second floor portion 18a toward a first floor portion 18c below the second floor portion 18a. However, the arrangement of the gas fuel supply path 11 in the pressure adjustment device 13 is not limited to this example, and the gas fuel supply path 11 may be appropriately arranged in accordance with the configuration of the housing 18 and the configurations and arrangements of the vaporizer 12 and the temperature adjustment unit 14.

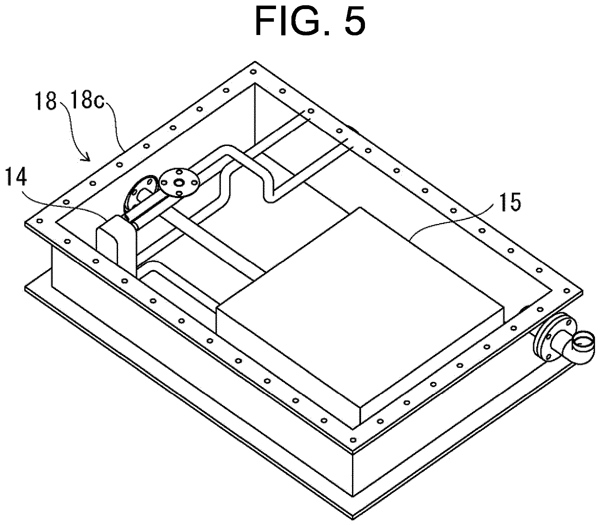

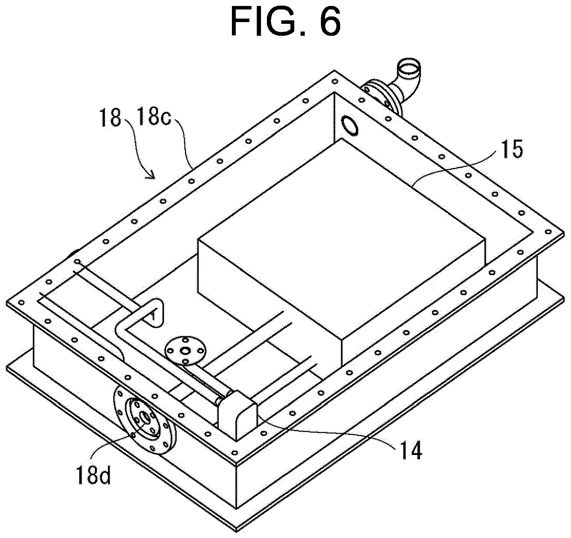

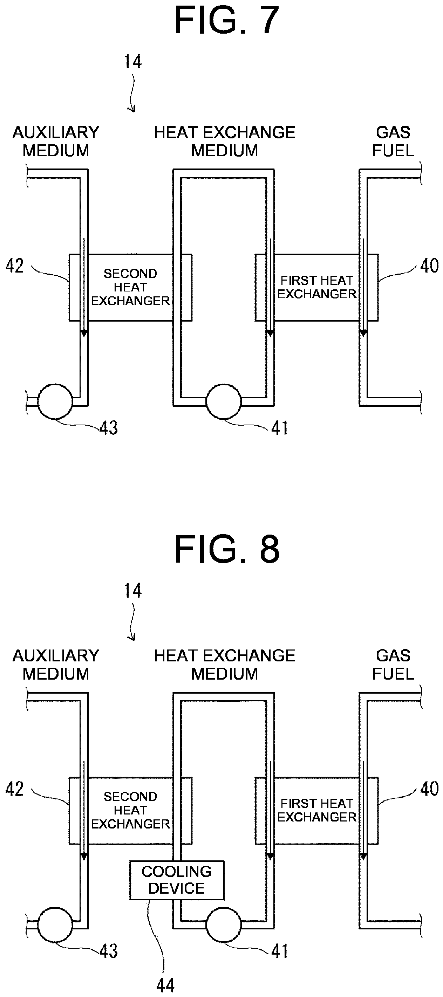

The temperature adjustment unit 14 adjusts the temperature of the gas fuel supplied via the gas fuel supply unit 16, and as illustrated in FIG. 5 and FIG. 6, supplies the gas fuel, the temperature of which is adjusted, through the gas fuel supply path 11 to the chamber 15. The temperature adjustment unit 14 is a unit separately disposed from the vaporizer 12 disposed for converting the liquefied gas fuel stored in the liquefied gas fuel tank 10 into a gas-phase state, and adjusts the temperature of the gas fuel in the gas-phase state. For example, as illustrated in FIG. 7, the temperature adjustment unit 14 includes a first heat exchanger 40 (heat exchange unit) and a first flow rate adjustment unit 41 (flow rate adjustment unit), and further includes a second heat exchanger 42 and a second flow rate adjustment unit 43.

The first heat exchanger 40 allows a heat exchange medium such as an ethylene glycol aqueous solution to flow therethrough and allows the gas fuel to flow therethrough, and allows the heat exchange medium to act on the gas fuel to perform heat exchange and thereby adjusts the temperature of the gas fuel. The first flow rate adjustment unit 41 is formed of a pump or the like, and adjusts the flow rate of the heat exchange medium flowing through the first heat exchanger 40 in response to a control signal from the control device 17 and thereby adjusts the temperature of the gas fuel heat-exchanged with the heat exchange medium.

The second heat exchanger 42 allows an auxiliary medium such as engine cooling water or engine oil to flow therethrough and allows the gas fuel to flow therethrough, and allows the auxiliary medium to act on the heat exchange medium to perform heat exchange and thereby adjusts the temperature of the heat exchange medium. The second flow rate adjustment unit 43 is formed of a pump or the like, and adjusts the flow rate of the auxiliary medium flowing through the second heat exchanger 42 in response to a control signal from the control device 17 and thereby adjusts the temperature of the heat exchange medium heat-exchanged with the auxiliary medium.

In other words, by using the first heat exchanger 40 and the second heat exchanger 42, the temperature of the gas fuel is finely adjusted. By stopping the flow of the heat exchange medium and the auxiliary medium, the first flow rate adjustment unit 41 and the second flow rate adjustment unit 43 can stop heat exchange.

The temperature adjustment unit 14 is disposed inside the housing 18 in common to the pressure adjustment device 13, and in the meantime, an example in which the temperature adjustment unit 14 is disposed on the first floor portion 18c of the housing 18 having a hierarchical structure is illustrated in FIG. 5 and FIG. 6. A partition wall 19 is disposed between the pressure adjustment device 13 and the temperature adjustment unit 14 in the housing 18. In FIG. 5 and FIG. 6, an example will be described in which the gas fuel supply path 11 in the temperature adjustment unit 14 enters from the upper surface of the first floor portion 18c of the housing 18 having a hierarchical structure, is disposed across the inside of the first floor portion 18c, and is further disposed so as to extend toward the chamber 15 disposed on the first floor portion 18c. However, the arrangement of the gas fuel supply path 11 in the temperature adjustment unit 14 is not limited to this example, and the gas fuel supply path 11 may be appropriately arranged in accordance with the configuration of the housing 18 and the configurations and arrangements of the temperature adjustment unit 14 and the chamber 15.

In addition, as illustrated in FIG. 8, the temperature adjustment unit 14 may include a cooling device 44 in addition to the first heat exchanger 40 and the first flow rate adjustment unit 41 that are described above and the second heat exchanger 42 and the second flow rate adjustment unit 43 that are described above. The temperature of the heat exchange medium that adjusts the temperature of the gas fuel in the first heat exchanger 40 is adjusted by the auxiliary medium in the second heat exchanger 42, and in the meantime, the cooling device 44 is disposed in the flow path of the heat exchange medium and is operated by electric power to lower the temperature of the heat exchange medium.

The chamber 15 is disposed between the temperature adjustment unit 14 and the gas fuel supply unit 16 in the supply direction of the gas fuel in the gas fuel supply path 11. In FIG. 5 and FIG. 6, an example will be illustrated in which the chamber 15 is disposed inside the housing 18 in common to the pressure adjustment device 13 and the temperature adjustment unit 14, in particular, is disposed on the first floor portion 18c in common to the temperature adjustment unit 14. In FIG. 6, an example is illustrated in which the gas fuel supply path 11 in the chamber 15 is disposed so as to exit from an outlet 18d on the side surface of the first floor portion 18c. The chamber 15 accumulates a predetermined amount or more of the gas fuel, the supply pressure is adjusted by the pressure adjustment device 13 and the temperature of which is adjusted by the temperature adjustment unit 14, and pressurizes, inside the gas fuel supply path 11, the gas fuel toward the downstream side of the chamber 15, thereby maintaining the adjusted supply pressure and temperature of the gas fuel on the downstream side of the chamber 15 regardless of the supply of the gas fuel by the gas fuel supply unit 16.

As described above, the gas fuel supply unit 16 is disposed in the cylinder head 24 of each of the cylinders 21 of the engine 2, and supplies the gas fuel into the intake port 27 in response to a control signal from the control device 17. For example, the gas fuel supply unit 16 is formed of a gas admission valve (GAV) or the like that injects the gas fuel. The gas fuel supply unit 16 adjusts the valve opening period in response to a control signal from the control device 17 and thereby can adjust the supply volume of the gas fuel.

The control device 17 is a computer such as an engine control unit (ECU) that controls the operation of the engine 2, includes a CPU, a ROM, a RAM, and the like, and is configured to control each part of the engine 2. The control device 17 stores various programs for controlling the engine 2, and controls the engine 2 by reading and executing the programs. In particular, the control device 17 controls the pressure adjustment device 13 and the temperature adjustment unit 14 in accordance with an operation state such as an engine output (engine speed) of the engine 2 or an operation environment such as an environmental temperature of the engine 2 or the fuel supply device 3. The control device 17 may be disposed on the engine 2 side or on the fuel supply device 3 side.

In the engine system 1, a target output of the engine 2 is determined in accordance with an operating state (a power generator load) of the power generator 4, and the supply volume of the gas fuel required for the combustion chamber 25 of each cylinder 21 is determined in accordance with the target output. Thus, the valve opening period and supply pressure of the gas fuel supplied to the combustion chamber 25 by the gas fuel supply unit 16 are determined in accordance with the target output. Accordingly, the control device 17 controls the pressure adjustment device 13 in accordance with the target output, thereby adjusting the supply pressure of the gas fuel so as to reach the supply pressure (or the supply pressure range) corresponding to the target output, that is, the target supply pressure (or the target supply pressure range). The control device 17 may set the valve opening period of the gas fuel supply unit 16 in accordance with the target supply pressure (or the target supply pressure range) set in advance, or may set the target supply pressure (or the target supply pressure range) in accordance with the valve opening period of the gas fuel supply unit 16 set in advance.

On the other hand, in the engine system 1, a lower limit value (minimum valve opening period) and an upper limit value (maximum valve opening period) of the valve opening period of the gas fuel of the gas fuel supply unit 16 and a lower limit value (minimum supply pressure) and an upper limit value (maximum supply pressure) of the supply pressure of the gas fuel of the pressure adjustment device 13 are determined. However, the control device 17 cannot set the valve opening period and the supply pressure that are outside the range of the lower limit value and the upper limit value. Accordingly, even when the valve opening period of the gas fuel supply unit 16, which is calculated in accordance with the target output becomes less than the minimum valve opening period because the target output (power generator load) of the engine 2 is low (in a low load region), the control device 17 sets the valve opening period of the gas fuel supply unit 16 to the minimum valve opening period or more. Therefore, an actual output of the engine 2 may exceed the target output.

However, according to the present embodiment, the control device 17 adjusts the temperature of the gas fuel supplied to the gas fuel supply unit 16 based on the equation of state of gas. Thus, regardless of the supply pressure set by the pressure adjustment device 13, the energy density (supply pressure) of the gas fuel supplied to the gas fuel supply unit 16 is adjusted and the supply volume can be adjusted. The temperature of the gas fuel supplied to the gas fuel supply unit 16 is not limited to a specific target temperature, and the gas fuel can be a gas fuel having a target energy density, that is, a gas fuel having a target supply pressure (or a target supply pressure range) as long as the temperature is within a predetermined target temperature range.

Specifically, in order to acquire the target temperature of the gas fuel corresponding to the target output of the engine 2, the control device 17 may determine and store in advance a map or a mathematical expression indicating the relationship between the target output of the engine 2 and the target temperature (or the target temperature range) of the gas fuel. The control device 17 calculates the target temperature of the gas fuel in accordance with the map or the mathematical expression based on the target output. Further, a parameter for specifying the target temperature may be only the target output of the engine 2. However, in addition to the target output or instead of the target output, a map or a mathematical expression may be determined in advance so as to specify the target temperature in accordance with discharge pressure of the vaporizer 12 or a reference injection period of the gas fuel supply unit 16. The control device 17 may previously have the map or the mathematical expression indicating the relationship between the target output of the engine 2 and the target temperature of the gas fuel for each operation environment (for example, environmental temperature or humidity) and use the map or the mathematical expression corresponding to the detected operation environment.

Furthermore, the control device 17 detects an actual temperature (detected temperature) of the gas fuel supplied to the gas fuel supply unit 16 and compares the actual temperature with the target temperature (the target temperature range), and when the detected temperature is not target temperature (or when the detected temperature is outside the target temperature range), the control device 17 controls the temperature of the gas fuel by the temperature adjustment unit 14 so that the detected temperature reaches the target temperature. In order to detect the temperature of the gas fuel supplied to the gas fuel supply unit 16, the engine system 1 includes a temperature sensor (not illustrated) in any one of the temperature adjustment unit 14, the chamber 15, the gas fuel supply path 11, and the gas fuel supply unit 16.

In addition, when the target temperature of the gas fuel reaches the target temperature, the supply pressure of the gas fuel of the gas fuel supply unit 16 varies in accordance with the target temperature with respect to the supply pressure of the gas fuel in the pressure adjustment device 13. Therefore, the control device 17 controls the pressure adjustment device 13 to adjust the supply pressure of the gas fuel in consideration of this supply pressure variation.

For example, when the target output of the engine 2 is low (in the low load region) and the detected temperature is lower than the target temperature, the control device 17 controls the first flow rate adjustment unit 41 of the temperature adjustment unit 14 to increase the temperature of the gas fuel so that the detected temperature reaches the target temperature. Also, when the target output of the engine 2 is a predetermined output threshold or more (in a high load region), the control device 17 controls the temperature adjustment unit 14 so as not to increase the temperature of the gas fuel regardless of the target temperature corresponding to the target output, for example, controls the first flow rate adjustment unit 41 to stop the flow of the heat exchange medium in the temperature adjustment unit 14.

Therefore, the control device 17 controls not only the supply pressure of the gas fuel in the pressure adjustment device 13 but also the temperature of the gas fuel in the temperature adjustment unit 14, and thus the energy density (supply pressure) of the gas fuel supplied to the gas fuel supply unit 16 can be more finely adjusted, and the supply volume can be more finely adjusted. For example, even when the valve opening period of the gas fuel supply unit 16 calculated in accordance with the target output of the engine 2 is less than the minimum valve opening period, the control device 17 increases the temperature of the gas fuel by the temperature adjustment unit 14 to decrease the energy density (supply pressure) of the gas fuel and thereby can set the actual output of the engine 2 to the target output. In other words, when the valve opening period (target valve opening period) of the gas fuel supply unit 16 calculated in accordance with the target output of the engine 2 is less than the minimum valve opening period, the control device 17 increases the temperature of the gas fuel by the temperature adjustment unit 14 so that the valve opening period of the gas fuel supply unit 16 to be actually controlled becomes the minimum valve opening period or more.

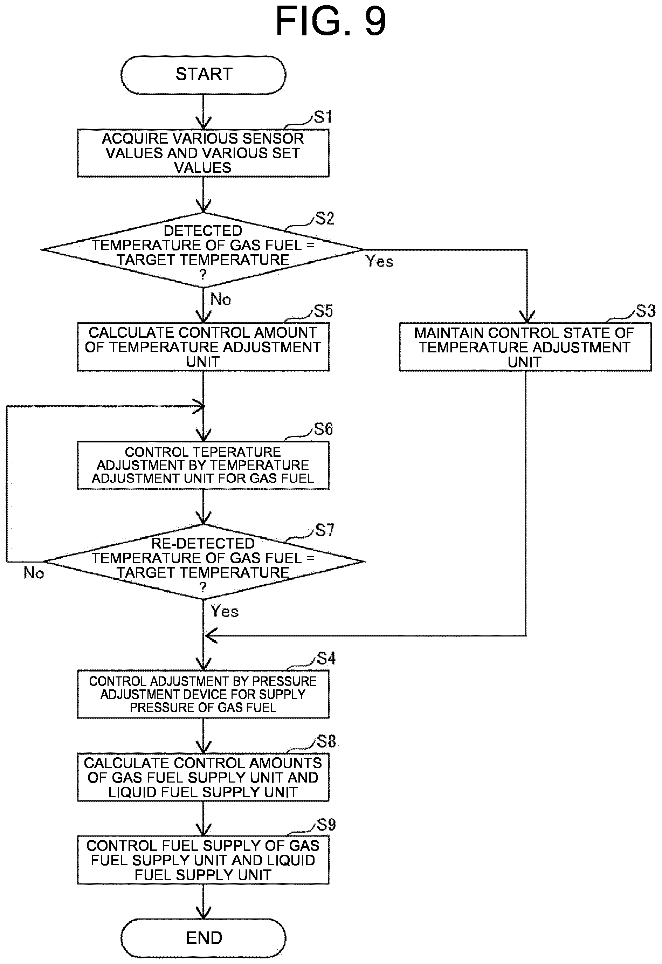

Next, an operation example of the fuel supply device 3 of the engine system 1 of the present embodiment will be described with reference to a flowchart of FIG. 9.

First, the control device 17 acquires, as control parameters of the fuel supply device 3, various sensor values and various set values relating to the operation state of the engine 2 or the operation environment such as the environmental temperature of the engine 2 and the fuel supply device 3 (step S1). For example, the control device 17 acquires a combustion mode, a mixed combustion ratio (a ratio of the gas fuel), the detected temperature of the gas fuel, and the target output of the engine 2 or the power generator load of the power generator 4 as the control parameters related to the operation state. In addition, the control device 17 acquires the environmental temperature, humidity, and the like of the engine 2 and the fuel supply device 3 as the control parameters related to the operation environment.

The control device 17 calculates, based on the acquired control parameter, the target temperature (or the target temperature range) of the gas fuel supplied to the gas fuel supply unit 16, and acquires the target temperature based on, for example, the map indicating the relationship between the target output of the engine 2 and the target temperature of the gas fuel. Then, the control device 17 compares the detected temperature of the gas fuel with the target temperature (step S2).

When the detected temperature of the gas fuel is the target temperature (or within the target temperature range) (step S2: Yes), the control device 17 maintains the current control state of the temperature adjustment unit 14 (step S3), and proceeds to the control of the pressure adjustment device 13 (step S4).

On the other hand, when the detected temperature of the gas fuel is not the target temperature (or is outside the target temperature range) (step S2: No), the control device 17 calculates the control amount of the temperature adjustment unit 14 (step S5), and controls the temperature adjustment unit 14 to adjust the temperature of the gas fuel based on the control amount (step S6). For example, the control device 17 calculates, based on the difference between the detected temperature and the target temperature, the flow rate of the heat exchange medium by the first flow rate adjustment unit 41 or the flow rate of the auxiliary medium by the second flow rate adjustment unit 43 as the control amount, and controls the first flow rate adjustment unit 41 or the second flow rate adjustment unit 43.

In parallel with the temperature adjustment of the temperature adjustment unit 14, the control device 17 re-detects the detected temperature of the gas fuel and compares the detected temperature of the gas fuel with the target temperature (step S7). When the re-detected temperature of the gas fuel is not the target temperature (step S7: No), the control device 17 continues the temperature adjustment of the temperature adjustment unit 14 (step S6).

On the other hand, when the re-detected temperature of the gas fuel is the target temperature (step S7: Yes), the control device 17 controls the temperature adjustment unit 14 to maintain the current temperature of the gas fuel, and proceeds to the control of the pressure adjustment device 13 (step S4).

In the control of the pressure adjustment device 13 (step S4), the control device 17 adjusts the supply pressure of the gas fuel to the target supply pressure corresponding to the target output. When the temperature of the gas fuel is adjusted by the temperature adjustment unit 14, the control device 17 controls the pressure adjustment device 13, in consideration of variation in supply pressure of the gas fuel after the temperature adjustment by the temperature adjustment unit 14, so that the supply pressure of the gas fuel supplied to the gas fuel supply unit 16 reaches the target supply pressure corresponding to the target output, thereby adjusting the supply pressure of the gas fuel.

Further, the control device 17 calculates control amounts such as the valve opening period and injection pressure of the gas fuel supply unit 16 and the liquid fuel supply unit 5 based on the supply volume of the gas fuel required in the combustion chamber 25 in accordance with the target output of the engine 2 and based on the supply pressure of the gas fuel of the gas fuel supply unit 16 (step S8).

Then, the control device 17 controls the gas fuel supply unit 16 and the liquid fuel supply unit 5 based on the calculated control amounts, thereby supplying the required supply volume of the gas fuel or the liquid fuel to the combustion chamber 25 and driving the engine 2 (step S9).

In the aforementioned operation example, the example is described in which the temperature of the gas fuel is re-detected and compared with the target temperature in step S7 that indicates the transition condition for transitioning to the control by the pressure adjustment device 13 after the temperature adjustment by the temperature adjustment unit 14, but the present invention is not limited to this example. As another example, instead of the transition condition described above, the control device 17 may determine that the transition condition is satisfied when a timer detects that a predetermined time has elapsed.

Alternatively, the control device 17 may omit the determination step of the transition condition, operate the temperature adjustment unit 14, and then directly transition to a gas fuel supply pressure control (steps S8 and S9). The temperature of the gas fuel needs to be adjusted during the operation in the gas mode, for example, an instruction to change the operation of the engine 2 from a medium output operation to a low output operation is input. In such a case, if the processing proceeds to the next step after the target temperature is attained, the responsiveness of the engine output change may decrease. Therefore, when the responsiveness of the engine output change is prioritized, the control device 17 may omit the aforementioned determination step of the transition condition.

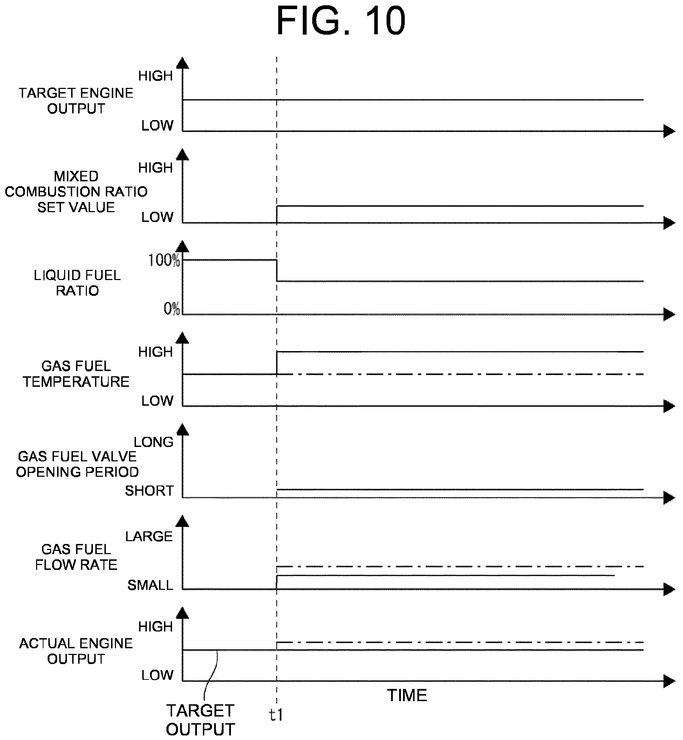

Further, an operation example of the fuel supply device 3 when the diesel mode is changed to the gas mode (or the mixed combustion mode) in the engine system 1 of the present embodiment will be described with reference to a time chart of FIG. 10.

FIG. 10 illustrates changes over time in the target output of the engine 2, the set value of the mixed combustion ratio of the fuel fed into the combustion chamber 25, the ratio of the liquid fuel, the temperature of the gas fuel supplied to the gas fuel supply unit 16, the valve opening period of the gas fuel supply unit 16, the flow rate of the gas fuel supplied from the gas fuel supply unit 16, and the actual output of the engine 2.

In this operation example, while the combustion mode is the diesel mode, the actual output of the engine 2 is the target output, and the combustion mode is changed from the diesel mode to the gas mode (or the mixed combustion mode) at time t1.

In response to this change of the combustion mode, the control device 17 sets the valve opening period of the gas fuel supply unit 16 to the minimum valve opening period and sets the flow rate of the gas fuel of the gas fuel supply unit 16 to a predetermined flow rate, thereby controlling the temperature adjustment unit 14 to increase the temperature of the gas fuel supplied to the gas fuel supply unit 16 when the actual output of the engine 2 becomes higher than the target output.

By increasing the temperature of the gas fuel as described above, the control device 17 can reduce the flow rate of the gas fuel supplied by the gas fuel supply unit 16 in the minimum valve opening period as compared with a case where the temperature of the gas fuel does not increase. Thus, the actual output of the engine 2 can be reduced as compared with the case where the temperature of the gas fuel does not increase, and specifically, can be suppressed to the target output. In FIG. 10, regarding the temperature and flow rate of the gas fuel and the actual output of the engine 2, a state where the temperature of the gas fuel is adjusted is indicated by a solid line, and a state where the temperature of the gas fuel is not adjusted is indicated by an alternate long and short dash line. When the temperature of the gas fuel is not adjusted, the actual output of the engine 2 increases until the liquid fuel is completely throttled, and thus the actual output exceeds the target output as indicated by the alternate long and short dash line. However, in the present embodiment, by adjusting the temperature of the gas fuel, the actual output can be prevented from exceeding the target output.

The control device 17 may perform control such that the temperature of the gas fuel gradually increases. In this case, the control device 17 may gradually decrease the actual output of the engine 2 by controlling the flow rate of the gas fuel of the gas fuel supply unit 16 to gradually decrease from the predetermined flow rate. Further, the control device 17 may control the liquid fuel supply unit 5 and the gas fuel supply unit 16 such that the ratio of the liquid fuel gradually decreases as the temperature of the gas fuel increases. Furthermore, when the temperature of the gas fuel reaches the target temperature, the control device 17 stops the temperature adjustment of the temperature adjustment unit 14. Accordingly, after being reduced to a constant output, for example, the target output, the actual output of the engine 2 is maintained.

As described above, according to the present embodiment, the fuel supply device 3 that supplies at least a gas fuel to the predetermined supply target such as the engine 2 includes the gas fuel supply unit 16 as the gas fuel adjustment unit that adjusts the supply volume of the gas fuel and supplies the gas fuel to the supply target, the pressure adjustment device 13 that adjusts the supply pressure of the gas fuel, and the temperature adjustment unit 14 that is disposed between the pressure adjustment device 13 and the gas fuel supply unit 16 in the supply direction of the gas fuel and adjusts, in accordance with the operation state and/or the operation environment of the supply target, the temperature of the gas fuel supplied to the gas fuel supply unit 16. The pressure adjustment device 13 and the temperature adjustment unit 14 are accommodated in the common housing 18.

Accordingly, the fuel supply device 3 adjusts the temperature of the gas fuel supplied to the gas fuel supply unit 16, thereby more finely controlling the supply volume of the gas fuel supplied from the gas fuel supply unit 16. Thus, the operation control of the supply target, for example, the output control of the engine 2 can be finely performed. Further, in the case of the gas fuel in a gas-phase state, a necessary heat transfer area is large as compared with the temperature adjustment of the gas fuel in a liquid-phase state. However, by providing the temperature adjustment unit 14 on the upstream side of the gas fuel supply unit 16, the necessary heat transfer area can be easily secured. Further, in the fuel supply device 3, the temperature adjustment unit 14 exchanges heat with the gas fuel, the flow rate of which is increased when the gas fuel passes through a pressure reducing valve or the like of the pressure adjustment device 13. Therefore, the temperature adjustment unit 14 can obtain high heat exchange efficiency and preform more appropriate temperature adjustment. As a result, the supply volume of the gas fuel supplied from the gas fuel supply unit 16 can be more finely controlled, and the operation control of the supply target, for example, the output control of the engine 2 can be finely controlled. In addition, in preparation for leaking of the gas fuel from each component, the fuel supply device 3 is desirably provided with the partition wall 19 in order to suppress diffusion of the gas fuel. However, the temperature adjustment unit 14 and the pressure adjustment device 13 are accommodated in the common housing 18 to be packaged therein, and thus installation work can be facilitated.

Further, according to the present embodiment, the fuel supply device 3 includes the liquefied gas fuel tank 10 as the gas fuel reservoir in which the gas fuel is stored, and the gas fuel supply path 11 that connects the liquefied gas fuel tank 10 to the gas fuel supply unit 16 and allows the gas fuel to flow therethrough. The pressure adjustment device 13 and the temperature adjustment unit 14 are disposed in the gas fuel supply path 11.

Accordingly, the fuel supply device 3 can appropriately adjust the supply pressure and temperature of the gas fuel supplied to the gas fuel supply unit 16.

Furthermore, according to the present embodiment, the fuel supply device 3 includes the chamber 15 disposed between the temperature adjustment unit 14 and the gas fuel supply unit 16 to store therein the gas fuel, the temperature of which is adjusted.

Accordingly, the fuel supply device 3 is provided with the chamber 15 subsequent to the temperature adjustment unit 14 and thus can stably supply the gas fuel, the temperature of which is adjusted, to the engine 2 regardless of the supply of the gas fuel by the gas fuel supply unit 16. By providing the chamber 15, various valves such as the first shut-off valve 36 and the second shut-off valve 37 that are included in the pressure adjustment device 13 can be simplified.

In addition, according to the present embodiment, in the fuel supply device 3, the supply target is the engine 2 including the plurality of cylinders 21, the gas fuel supply unit 16 is a gas fuel supply valve included in each of the plurality of cylinders 21, the gas fuel supply path 11 includes the common path 11a through which the gas fuel flows in common into the plurality of cylinders 21, and the temperature adjustment unit 14 is disposed in the common path 11a.

Accordingly, the fuel supply device 3 can be simplified compared with a case where a mechanism that adjusts the temperature of the gas fuel is disposed for each gas fuel supply valve.

Further, according to the present embodiment, in the engine system 1 including the fuel supply device 3 described above and the engine 2, the temperature adjustment unit 14 includes the first heat exchanger 40 as the heat exchange unit that allows the heat exchange medium to flow therethrough and act on the gas fuel, and the first flow rate adjustment unit 41 that adjusts the flow rate of the heat exchange medium. The engine system 1 further includes the control device 17 that controls the gas fuel supply unit 16 and the first flow rate adjustment unit 41. The control device 17 calculates the target temperature of the gas fuel based on the target output of the engine 2, and when the detected temperature of the gas fuel is below the target temperature, the control device 17 controls the first flow rate adjustment unit 41 to increase the temperature of the gas fuel so that the detected temperature reaches the target temperature.

In the engine system 1, even when the required valve-opening period of the gas fuel supply unit 16 calculated based on the target output of the engine 2 is smaller than the minimum valve opening period, the gas fuel supply unit 16 is operated in the minimum valve opening period to supply the gas fuel. Therefore, a larger volume of the gas fuel than planned may be supplied, and the actual output of the engine 2 may be higher than the target output. In contrast, in the present embodiment, the temperature of the gas fuel is increased to the target temperature based on the target output of the engine 2 to decrease the energy density of the gas fuel supplied from the gas fuel supply unit 16. Thus, even if the gas fuel supply unit 16 is operated in the valve opening period equal to or longer than the minimum valve opening period when the required valve opening period is shorter than the minimum valve opening period, the actual output of the engine 2 can be controlled to the target output.

Furthermore, according to the present embodiment, in the engine system 1 including the fuel supply device 3 described above and the engine 2, the temperature adjustment unit 14 includes the first heat exchanger 40 as the heat exchange unit that allows the heat exchange medium to flow therethrough and act on the gas fuel, and the first flow rate adjustment unit 41 that adjusts the flow rate of the heat exchange medium. The engine system 1 further includes the control device 17 that controls the gas fuel supply unit 16 and the first flow rate adjustment unit 41. When the target output of the engine 2 is the predetermined output threshold or more, the control device 17 controls the first flow rate adjustment unit 41 to stop the flow of the heat exchange medium.

Alternatively, in the engine system 1, the temperature adjustment unit 14 includes the first heat exchanger 40 as the heat exchange unit that allows the heat exchange medium to flow therethrough and act on the gas fuel, and the cooling device 44 that cools the heat exchange medium. The engine system 1 further includes the control device 17 that controls the gas fuel supply unit 16 and the cooling device 44. When the target output of the engine 2 is the predetermined output threshold or more, the control device 17 controls the cooling device 44 to operate.

Accordingly, when the engine 2 is brought into the high load region, the engine system 1 decreases the temperature of the gas fuel supplied to the gas fuel supply unit 16 and thus can supply a larger volume of the gas fuel to the engine 2 and obtain a high output.

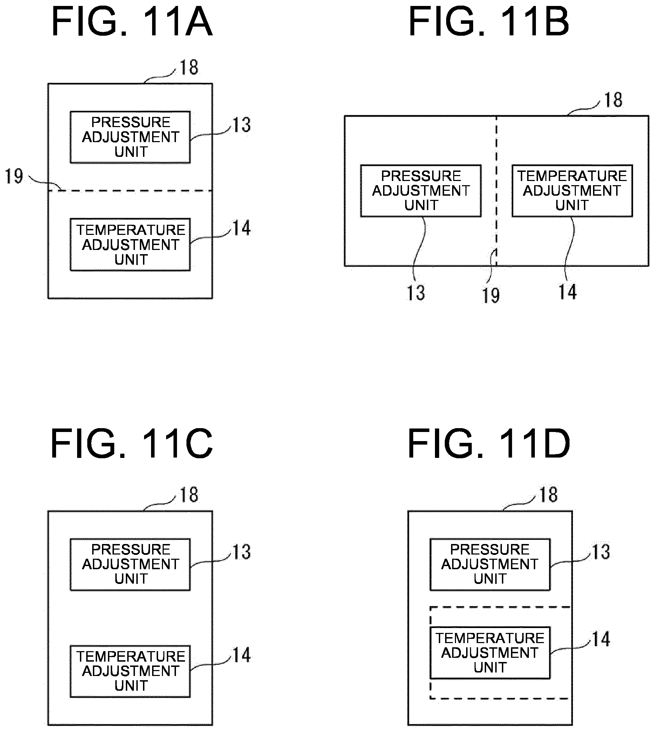

Further, in the embodiment described above, as illustrated in FIGS. 3 to 6 and FIG. 11A, an example in which the pressure adjustment device 13 and the temperature adjustment unit 14 are arranged at the upper side and the lower side in the housing 18 having a hierarchical structure is described, but the present invention is not limited to this example. For example, as illustrated in FIG. 11B, the pressure adjustment device 13 and the temperature adjustment unit 14 may be arranged respectively in two installation spaces that are adjacent to each other in the lateral direction in the housing 18 and separated by the partition wall 19. Alternatively, as illustrated in FIG. 11C, the pressure adjustment device 13 and the temperature adjustment unit 14 may be arranged in one installation space of the housing 18 without being separated by the partition wall 19. Furthermore, as illustrated in FIG. 11D, one small installation space may be prepared in one large installation space in the housing 18, the pressure adjustment device 13 may be arranged in the small installation space, and the temperature adjustment unit 14 may be arranged in the large installation space. Alternatively, the pressure adjustment device 13 may be arranged in the large installation space, and the temperature adjustment unit 14 may be arranged in the small installation space.

In addition, as another example, in order to improve real-time property of the temperature of the gas fuel in the gas fuel supply unit 16 with respect to the temperature adjustment of the gas fuel in the temperature adjustment unit 14, another path that communicates from the temperature adjustment unit 14 to the gas fuel supply unit 16 without passing through the chamber 15 may be disposed. Moreover, in order to improve the real-time property of the temperature of the gas fuel standing by from the chamber 15 to the gas fuel supply unit 16, the gas fuel, the temperature of which is adjusted by the temperature adjustment unit 14 may be circulated.

In the embodiment described above, an example is described in which the engine system 1 (the control device 17) adjusts the supply pressure of the gas fuel by the pressure adjustment device 13 so that the target supply pressure (or the target supply pressure range) corresponding to the target output of the engine 2 is attained, and adjusts the supply volume of the gas fuel by controlling the temperature of the gas fuel by the temperature adjustment unit 14 so that the detected temperature of the gas fuel supplied to the gas fuel supply unit 16 reaches the target temperature corresponding to the operation state (for example, the target output) of the engine 2 or the operation environment of the engine 2 or the fuel supply device 3. However, the present invention is not limited to this example.

For example, in a modified example of the present invention, without controlling the temperature of the gas fuel and in accordance with the operation state of the engine 2 and/or the operation environment of the engine 2 or the fuel supply device 3, the engine system 1 (the control device 17) adjusts the supply pressure of the gas fuel by the pressure adjustment device 13 and adjusts the valve opening period by the gas fuel supply unit 16, and thus may adjust the supply volume of the gas fuel.

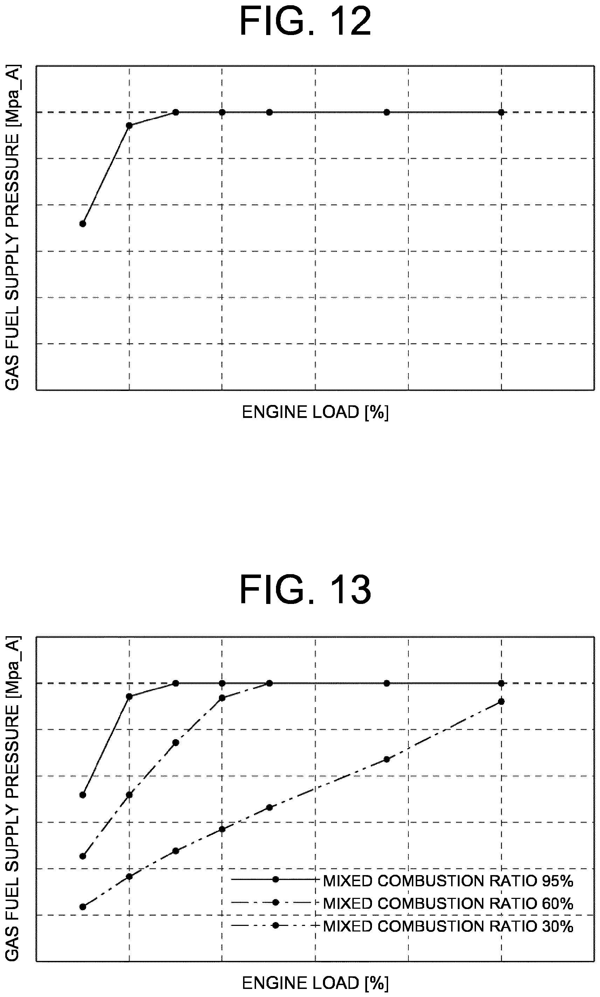

In this modified example, specifically, as illustrated in FIG. 12, when the engine 2 is normally operated, the control device 17 adjusts, by the pressure adjustment device 13, the supply pressure of the gas fuel supplied from the fuel supply device 3 to the gas fuel supply unit 16 to be a constant value regardless of the operation state and/or the operation environment.

On the other hand, when the engine 2 is operated in the low load region, the control device 17 adjusts, by the pressure adjustment device 13, the supply pressure of the gas fuel to supply pressure corresponding to the operation state and/or the operation environment. In this case, the control device 17 detects an actual load applied to the engine 2, and when the actual load is a predetermined load threshold (for example, 20%) or less, the control device 17 determines that the engine 2 is in the low load region.

The control device 17 preferably determines and stores in advance a map or a mathematical expression indicating the relationship between the load of the engine 2 and the target supply pressure (or the target supply pressure range) of the gas fuel. The control device 17 preferably holds the map or the mathematical expression indicating the relationship between the load of the engine 2 and the target supply pressure of the gas fuel for each operation environment (for example, environmental temperature or humidity), and preferably uses the map or the mathematical expression corresponding to the detected operation environment. Then, the control device 17 acquires the target supply pressure corresponding to the detected actual load of the engine 2 based on the map or the mathematical expression, and adjusts the supply pressure of the gas fuel to the target supply pressure by the pressure adjustment device 13.

At this time, the control device 17 controls the pressure adjustment device 13 to change the supply pressure of the gas fuel at a pressure change rate corresponding to the operation mode of the engine 2. Specifically, when the detected supply pressure of the gas fuel is higher than the target supply pressure corresponding to the actual load of the engine 2, the control device 17 adjusts and decreases the supply pressure of the gas fuel. Also, when the detected supply pressure of the gas fuel is lower than the target supply pressure corresponding to the actual load of the engine 2, the control device 17 adjusts and increases the supply pressure of the gaseous fuel.

The control device 17 sets the pressure change rate to be faster when the operation mode of the engine 2 is a notch-down mode or an emergency response mode than when the operation mode of the engine 2 is a normal mode. For example, the control device 17 sets the pressure change rate to ±1 Mpa/min when the operation mode of the engine 2 is the normal mode, and sets the pressure change rate to ±15 Mpa/sec when the operation mode of the engine 2 is the notch-down mode or the emergency response mode. Since the target supply pressure reaches the upper limit value or the lower limit value, the control device 17 does not adjust the supply pressure to exceed the target supply pressure.

FIG. 12 indicates a map illustrating the relationship between the load of the engine 2 and the target supply pressure of the gas fuel when the combustion mode of the engine 2 is the gas mode, and FIG. 13 indicates a map illustrating the relationship between the load of the engine 2 and the target supply pressure of the gas fuel when the combustion mode of the engine 2 is the mixed combustion mode.

In the mixed combustion mode, when the mixed combustion ratio is low, the gas fuel supply unit 16 needs to minutely inject the gas fuel in order to reduce the supply volume of the gas fuel. However, the supply volume of the gas fuel may not be completely reduced due to the response speed of the gas fuel supply unit 16 with respect to the minute injection control. Therefore, as illustrated in FIG. 13, the control device 17 preferably prepares in advance the map or the mathematical expression indicating the relationship between the load of the engine 2 and the target supply pressure of the gas fuel so that a load threshold is higher as the mixed combustion ratio is lower.

The present invention can be modified as appropriate without departing from the spirit or concept of the invention that can be read from the scope of the claims and the entire specification, and a fuel supply device and an engine system with such modifications are also included in the technical concept of the present invention.

### Supplementary Notes of the Invention

Hereinafter, the outline of the invention extracted from the aforementioned embodiment will be additionally described. Configurations and processing functions described in the following supplementary notes may be selected and combined as appropriate.

### Supplementary Note 1

A fuel supply device that supplies at least a gas fuel to a predetermined supply target, the fuel supply device comprising:
a gas fuel adjustment unit that adjusts a supply volume of the gas fuel and supplies the gas fuel to the supply target;
a pressure adjustment device that adjusts supply pressure of the gas fuel; and
a temperature adjustment unit that is disposed between the pressure adjustment device and the gas fuel adjustment unit in a supply direction of the gas fuel and adjusts, in accordance with an operation state and/or an operation environment of the supply target, a temperature of the gas fuel supplied to the gas fuel adjustment unit,
wherein the pressure adjustment device and the temperature adjustment unit are accommodated in a common housing.

### Supplementary Note 2

The fuel supply device according to Supplementary Note 1, comprising
a gas fuel reservoir in which the gas fuel is stored, and
a gas fuel supply path that connects the gas fuel reservoir to the gas fuel adjustment unit and allows the gas fuel to flow therethrough,
wherein the pressure adjustment device and the temperature adjustment unit are disposed in the gas fuel supply path.

### Supplementary Note 3

The fuel supply device according to Supplementary Note 1 or 2, comprising a chamber disposed between the temperature adjustment unit and the gas fuel adjustment unit to store therein the gas fuel, the temperature of which is adjusted.

### Supplementary Note 4

The fuel supply device according to Supplementary Note 2 or 3, wherein the supply target is an engine including a plurality of cylinders,
the gas fuel adjustment unit is a gas fuel supply valve included in each of the plurality of cylinders,
the gas fuel supply path includes a common path through which the gas fuel flows in common into the plurality of cylinders, and
the temperature adjustment unit is disposed in the common path.

### Supplementary Note 5

An engine system comprising:
the fuel supply device according to Supplementary Note 4; and
the engine,
wherein the temperature adjustment unit includes a heat exchange unit that allows a heat exchange medium to flow therethrough and act on the gas fuel, and a flow rate adjustment unit that adjusts a flow rate of the heat exchange medium,
the engine system further comprises a control device that controls the gas fuel adjustment unit and the flow rate adjustment unit,
the control device calculates a target temperature of the gas fuel based on a target output of the engine, and
when a detected temperature of the gas fuel is below the target temperature, the control device controls the flow rate adjustment unit to increase the temperature of the gas fuel to cause the detected temperature to reach the target temperature.

### Supplementary Note 6

An engine system comprising:
the fuel supply device according to Supplementary Note 4; and
the engine,
wherein the temperature adjustment unit includes a heat exchange unit that allows a heat exchange medium to flow therethrough and act on the gas fuel, and a flow rate adjustment unit that adjusts a flow rate of the heat exchange medium,
the engine system further comprises a control device that controls the gas fuel adjustment unit and the flow rate adjustment unit, and
when a target output of the engine is a predetermined output threshold or more, the control device controls the flow rate adjustment unit to stop a flow of the heat exchange medium.

### Supplementary Note 7

An engine system comprising:
the fuel supply device according to Supplementary Note 4; and
the engine,
wherein the temperature adjustment unit includes a heat exchange unit that allows a heat exchange medium to flow therethrough and act on the gas fuel, and a cooling device that cools the heat exchange medium,
the engine system further comprises a control device that controls the gas fuel adjustment unit and the cooling device, and
when a target output of the engine is a predetermined output threshold or more, the control device controls the cooling device to operate.

### REFERENCE SIGNS LIST

1 Engine system
2 Engine (supply target)
3 Fuel supply device
4 Power generator
5 Liquid fuel supply unit
10 Liquefied gas fuel tank (gas fuel reservoir)
11 Gas fuel supply path
11a Common path
11b Branch path
12 Vaporizer
13 Pressure adjustment device
14 Temperature adjustment unit
15 Chamber
16 Gas fuel supply unit (gas fuel adjustment unit)
17 Control device
18 Housing
21 Cylinder
25 Combustion chamber
36 First shut-off valve
37 Second shut-off valve
38 Open path
39 Open valve
40 First heat exchanger
41 First flow rate adjustment unit
42 Second heat exchanger
43 Second flow rate adjustment unit
44 Cooling device

## Claims

1. A fuel supply device that supplies at least a gas fuel to a predetermined supply target, the fuel supply device comprising:
a gas fuel adjustment unit that adjusts a supply volume of the gas fuel and supplies the gas fuel to the supply target;
a pressure adjustment device that adjusts supply pressure of the gas fuel; and
a temperature adjustment unit that is disposed between the pressure adjustment device and the gas fuel adjustment unit in a supply direction of the gas fuel and adjusts, in accordance with an operation state and/or an operation environment of the supply target, a temperature of the gas fuel supplied to the gas fuel adjustment unit,
wherein the pressure adjustment device and the temperature adjustment unit are accommodated in a common housing.

2. The fuel supply device according to claim 1, comprising
a gas fuel reservoir in which the gas fuel is stored, and
a gas fuel supply path that connects the gas fuel reservoir to the gas fuel adjustment unit and allows the gas fuel to flow therethrough,
wherein the pressure adjustment device and the temperature adjustment unit are disposed in the gas fuel supply path.

3. The fuel supply device according to claim 1, comprising a chamber disposed between the temperature adjustment unit and the gas fuel adjustment unit to store therein the gas fuel, the temperature of which is adjusted.

4. The fuel supply device according to claim 2, wherein the supply target is an engine including a plurality of cylinders,
the gas fuel adjustment unit is a gas fuel supply valve included in each of the plurality of cylinders,
the gas fuel supply path includes a common path through which the gas fuel flows in common into the plurality of cylinders, and
the temperature adjustment unit is disposed in the common path.

5. An engine system comprising:
the fuel supply device according to claim 4; and
the engine,
wherein the temperature adjustment unit includes a heat exchange unit that allows a heat exchange medium to flow therethrough and act on the gas fuel, and a flow rate adjustment unit that adjusts a flow rate of the heat exchange medium,
the engine system further comprises a control device that controls the gas fuel adjustment unit and the flow rate adjustment unit,
the control device calculates a target temperature of the gas fuel based on a target output of the engine, and
when a detected temperature of the gas fuel is below the target temperature, the control device controls the flow rate adjustment unit to increase the temperature of the gas fuel to cause the detected temperature to reach the target temperature.

6. An engine system comprising
the fuel supply device according to claim 4; and
the engine,
wherein the temperature adjustment unit includes a heat exchange unit that allows a heat exchange medium to flow therethrough and act on the gas fuel, and a flow rate adjustment unit that adjusts a flow rate of the heat exchange medium,
the engine system further comprises a control device that controls the gas fuel adjustment unit and the flow rate adjustment unit, and
when a target output of the engine is a predetermined output threshold or more, the control device controls the flow rate adjustment unit to stop a flow of the heat exchange medium.

7. An engine system comprising:
the fuel supply device according to claim 4; and
the engine,
wherein the temperature adjustment unit includes a heat exchange unit that allows a heat exchange medium to flow therethrough and act on the gas fuel, and a cooling device that cools the heat exchange medium,
the engine system further comprises a control device that controls the gas fuel adjustment unit and the cooling device, and
when a target output of the engine is a predetermined output threshold or more, the control device controls the cooling device to operate.
